**Europäisches Patentamt**

(19) **European Patent Office**

**Office européen des brevets**

(11) Veröffentlichungsnummer: **0 045 422**
**B1**

(12) **EUROPÄISCHE PATENTSCHRIFT**

(45) Veröffentlichungstag der Patentschrift:
03.10.84

(51) Int. Cl.³: **B 01 D 53/02,** C 01 B 31/08,
C 07 C 7/13

(21) Anmeldenummer: 81105648.0

(22) Anmeldetag: 18.07.81

(54) **Verfahren zur adsorptiven Entfernung von Schwefelwasserstoff aus Gasgemischen.**

(30) Priorität: 01.08.80 DE 3029187

(43) Veröffentlichungstag der Anmeldung:
10.02.82 Patentblatt 82/6

(45) Bekanntmachung des Hinweises auf die Patenterteilung:
03.10.84 Patentblatt 84/40

(84) Benannte Vertragsstaaten:
FR GB IT NL

(56) Entgegenhaltungen:
DE - A - 2 530 091
DE - A - 2 606 089
FR - A - 1 181 210
US - A - 3 222 412
US - A - 3 960 768
US - A - 4 072 479

(73) Patentinhaber: **Bergwerksverband GmbH,**
**Franz-Fischer-Weg 61, D-4300 Essen 13 (DE)**

(72) Erfinder: **Henning, Klaus-Dirk, Am Kirchhof 29,**
**D-4300 Essen (DE)**
Erfinder: **Klein, Jürgen, Dr., Hülscherfeld 32,**
**D-4300 Essen 14 (DE)**
Erfinder: **Harder, Burkhard, Dr., Lärchenweg 8b,**
**D-4320 Hattingen 1 (DE)**

## Beschreibung

Die Erfindung betrifft ein Verfahren zur adsorptiven Entfernung von Schwefelwasserstoff aus sauerstofffreien Gasgemischen gemäss dem Oberbegriff von Anspruch 1 sowie eine Weiterbildung des Verfahrens für sauerstoffhaltige Gasgemische.

Die Schwefelwasserstoff-Entfernung aus technischen Gasen wird nach zahlreichen bekannten Verfahren betrieben, die sowohl Wasch- als auch Adsorptionsverfahren betreffen.

Unter den Adsorptionsverfahren werden die unter oxidativer Adsorption an Aktivkohle oder Eisenoxiden verlaufenden Verfahren zwar relativ oft durchgeführt, jedoch sind sie nur erfolgreich, wenn die Schwefelwasserstoff-Konzentration im zu reinigenden Gas unter 10 g $H_2S/m^3$ Gas liegt. Das gleiche gilt für die Adsorptionsverfahren, die unter chemischer Reaktion mit Eisenoxid oder Zinkoxid durchgeführt werden.

Es ist weiter bekannt, Schwefelwasserstoff aus sauerstofffreien Gasgemischen durch Adsorption an zeolithischen Molekularsieben zu entfernen. Diese bekannten Verfahren werden beispielsweise bei der Reinigung von Erdgasen verwendet. Hierbei werden je nach $H_2S$-Partialdruck jedoch nur $H_2S$-Beladungen der Molekularsiebe von 4–5 Gew.-% erzielt. Die Regenerierung der zeolithischen Molekularsiebe muss mit sauerstofffreiem Inertgas oder überhitztem Dampf bei 300–400°C erfolgen. Neben den hohen Desorptionstemperaturen sind die gleichzeitige Adsorption von $CO_2$ sowie die hohe Adsorptionsselektivität gegenüber Wasser weitere Nachteile dieses bekannten Verfahrens (DE-A 2 530 091).

Es ist zwar ausserdem bereits bekannt, Schwefelwasserstoff durch Adsorption an Aktivkohle aus Gasgemischen zu entfernen, jedoch sind diese Verfahren wegen der geringen Beladbarkeit der Aktivkohlen mit Schwefelwasserstoff ohne praktische Bedeutung geblieben (Hedden und Schnürer, Freiberger Forschungshefte A 413).

Der Erfindung liegt die Aufgabe zugrunde, die Schwefelwasserstoff-Entfernung bei dem eingangs geschilderten Adsorptionsverfahren so weit zu verbessern, dass weder die Nachteile der bekannten Wasch- noch der Adsorptionsverfahren mit zeolithischen Molekularsieben auftreten.

Diese Aufgabe wird erfindungsgemäss durch die kennzeichnenden Merkmale des Anspruchs 1 gelöst.

Es wurde überraschenderweise gefunden, dass mit diesen kohlenstoffhaltigen Molekularsieben $H_2S$-Aufnahmekapazitäten erzielt werden, die um den Faktor 2–3 über denen von handelsüblichen Aktivkohlen liegen.

Die folgende Tabelle zeigt beispielsweise die Unterschiede in der Grösse des durch Methanoladsorption gemessenen Mikroporenvolumens zwischen den erfindungsgemäss zu verwendenden kohlenstoffhaltigen Molekularsieben und handelsüblichen Aktivkohlen in cm³/100 g Adsorptionsmittel.

|  | Mikroporenradius | | |
|  | $r < 10\,nm$ | $r < 0,16\,nm$ | $0,35$–$10\,nm$ |
|---|---|---|---|
| Erfindungsgemässe kohlenstoffhaltige | Mikroporenvolumen | | |
| Molekularsiebe Nr. 1 | 20,8 | 5,0 | 6 |
| 2 | 17,5 | 5,3 | 5 |
| 3 | 16,6 | 4,2 | 3 |
| 4 | 17,4 | 3,9 | 3 |
| Handelsübliche Aktivkohle | | | |
| F 400  } Fa. Chemviron | 53,6 | 5,3 | 30,0 |
| BPL  } | 48,9 | 5,9 | 24,2 |
| Sorbonorit III, Fa. Norit | 57,5 | 5,8 | 29,1 |

Kohlenstoffhaltige Molekularsiebe mit dem von der Erfindung geforderten Mikroporenvolumen (mit Methanoladsorption gemessen) werden beispielsweise auf die in der DE-C 2 013 604 beschriebene Weise erhalten: Ein Gemisch aus 80 Gew.-% mit Luft bis zu einem Sauerstoffgehalt von ca. 12% oxidierter Steinkohle (Flüchtige Bestandteile 20% waf) und 20 Gew.-% Pech mit einem Erweichungspunkt nach Krämer-Sarnow von 40°C wird zu Formlingen gepresst, die bei einer Temperatur von bis 900°C auf eine Dauer von 1 h geschwelt werden.

Jeweils 30 kg dieser geschwelten Formlinge werden dann in einem Drehrohrofen bei einer Temperatur von 900°C und unter einem Wasserdampfdurchsatz von 8 l/h während einer Verweilzeit von etwa 92 min aktiviert. Dann wird der Wasserdampfstrom abgebrochen und das Produkt in einer strömenden Stickstoffatmosphäre abgekühlt. Im Temperaturbereich von 500 bis 250°C wird hierbei dem Stickstoff 3 Vol.-% Wasserstoff zugesetzt. Nach vollständiger Abkühlung kann das Molekularsieb erfindungsgemäss verwendet werden.

Eine Weiterbildung des erfindungsgemässen Verfahrens für sauerstoffhaltige Gasgemische ist in Anspruch 2 wiedergegeben.

Der Sauerstoffgehalt eines in den Adsorptionsreaktor eingeleiteten Gasgemisches sollte vorzugsweise unterhalb 0,01 Vol.-% gehalten werden, da der Sauerstoff zur Oxidation von $H_2S$ zu Schwefel und dessen Ablagerung in den Poren führen kann. Bei dem zur Sauerstoffentfernung vorgeschlagenen, dem Adsorptionsreaktor vorgeschalteten katalysatorbett fördert eine Kaliumjodidtränkung des Katalysators (z.B. einer Aktivkohle) die Reaktion.

Mit der erfindungsgemässen Verwendung der speziellen Molekularsiebe gelingt es, Schwefelwasserstoff aus Gasgemischen mit nur 0,001 Vol.-% $H_2S$ bis zu 70 Vol.-% $H_2S$ im Gas bei Strömungsgeschwindigkeiten von 1–40 cm/s im Adsorptionsreaktor mit einem nahezu 100%igen Entschwefelungsgrad zu entfernen. In jedem Fall kann der $H_2S$-Gehalt unter die Nachweisgrenze gesenkt werden.

Die $H_2S$-beladenen Molekularsiebe können nach allen bekannten Verfahren regeneriert werden. Die Auswahl ist sowohl von der $H_2S$-Konzentration im Gasgemisch als auch von der gewünschten Reinheit der Produktgase abhängig. Bei hohen $H_2S$-Gehalten bietet sich ein reines Druckwechsel-Verfahren an, bei dem sowohl das Reingas als auch der abgetrennte Schwefelwasserstoff mit einer Konzentration von über 98% anfallen. Wird eine Feinreinigung gewünscht, so kann durch eine Spülung oder durch eine Temperaturerhöhung bei der Druckwechsel-Regeneration die Qualität des Reingases verbessert werden. Die Molekularsiebe können jedoch auch allein durch einen Temperaturwechsel-Prozess regeneriert werden.

Gegenüber den bekannten Verfahren werden beim erfindungsgemässen Verfahren mehrere Vorteile erzielt. So kann neben einer vollständigen $H_2S$-Entfernung aus Gasgemischen selbst bei $H_2S$-Konzentrationen bis zu 90 Vol.-% eine hohe selektive Trennwirkung in einem weiten Konzentrationsbereich erzielt werden. Weitere Vorteile sind eine hohe $H_2S$-Konzentration im Desorptionsgas und keine Verminderung der Trennleistung bei feuchten und/oder $CO_2$-haltigen Gasgemischen.

Beispiel 1

Ein Gasgemisch, bestehend aus 5 Vol.-% $H_2S$ und 95 Vol.-% Stickstoff, wird bei 1 bar und 20°C in einer an sich bekannten 2-Adsorberanlage für Gastrennung durch Adsorption und Desorption in einen Stickstoffstrom und einen $H_2S$-Strom zerlegt. Die Trennung erfolgt unter Verwendung des kohlenstoffhaltigen Molekularsiebes Nr. 2 der Tabelle.

Der Gasdurchsatz beträgt 100 l/h bei einer Strömungsgeschwindigkeit von 6,1 cm/s. Die Regenerierung des Molekularsiebes erfolgt jeweils nach 15 min durch Druckabsenkung auf 0,05 bar.

Der Stickstoffstrom besitzt eine Reinheit von 99,5%, d.h. 90% des Schwefelwasserstoffes wurden entfernt. Schwefelwasserstoff wird in einer Konzentration von ca. 70–80 Vol.-% gewonnen.

Beispiel 2

Ein Gasgemisch, bestehend aus 33,9 Vol.-% $H_2S$ und 66,1 Vol.-% Wasserstoff, wird bei 1 bar und 20°C in der im Beispiel 1 verwendeten Adsorberanlage in einen Wasserstoffstrom und einen $H_2S$-Strom zerlegt. Zur Anwendung gelangt das kohlenstoffhaltige Molekularsieb Nr. 4 der Tabelle.

Der Gasdurchsatz beträgt 50 l/h bei einer Strömungsgeschwindigkeit von 3,1 cm/s. Die Regenerierung des Molekularsiebes erfolgt jeweils nach 4 min durch Druckabsenkung auf 0,05 bar.

Auch nach 1000 Zyklen zeigte sich noch keine Minderung der Standzeit des Molekularsiebes. Es wird unverändert ein Wasserstoff-Produktgas-Strom mit einer Reinheit von 98–99,5% erhalten. Der Schwefelwasserstoff-Strom fällt mit einer Reinheit von 98% an.

Patentansprüche

1. Verfahren zur adsorptiven Entfernung von Schwefelwasserstoff aus sauerstofffreien Gasgemischen an kohlenstoffhaltigen Adsorptionsmitteln durch Adsorption bei Drucken zwischen 1–80 bar und Regeneration durch Druckerniedrigung und/oder Temperaturwechsel bei gleichzeitiger Spülung mit einer nicht oder nur wenig adsorbierbaren Komponente des Gasgemisches in einem Adsorptionsreaktor, dadurch gekennzeichnet, dass als Adsorptionsmittel ein aus fossilen und/oder rezenten bituminösen Brennstoffen hergestelltes, kohlenstoffhaltiges Molekularsieb verwendet wird, dessen bei Porenradien kleiner als 10 nm durch Methanoladsorption gemessenes Porenvolumen 15–25 $cm^3$/100 g beträgt, wobei das Porenvolumen im Porenradienbereich von 0,35–10 nm kleiner als 10 $cm^3$/100 g ist, und dessen innere Oberfläche mittels einer Nachbehandlung mit einem reduzierenden Gas von zur Reaktion mit dem $H_2S$ befähigten Oberflächengruppen befreit ist.

2. Verfahren nach Anspruch 1 zur Anwendung bei sauerstoffhaltigen Gasgemischen, dadurch gekennzeichnet, dass der Sauerstoff vor Eintritt in den Adsorptionsreaktor entfernt wird, indem das Gasgemisch durch ein an sich bekanntes Katalysatorbett hindurchgeleitet wird, in welchem ein Teil des $H_2S$ mit dem zu entfernenden Sauerstoff zu elementarem Schwefel reagiert.

Claims

1. A process for the adsorptive elimination of hydrogen sulphide from oxygen-free gaseous mixtures on carbon-containing adsorption agents by adsorption at pressures of between 1 and 80 bar and regeneration by pressure reduction and/or temperature change with simultaneous scavenging with a non-adsorbable or only slightly adsorbable component of the gaseous mixture in an adsorption reactor, characterized in that use is made of a carbon-containing molecular sieve which is produced from fossil and/or recent bituminous fuels and the pore volume of which, measured by methanol adsorption in the case of pore radii less than 10 nm, amounts to from 15 to 25 $cm^3$/100 g, the pore volume in the pore radius range of from 0.35 to 10 nm being less than 10 $cm^3$/100 g, and the inner surface of which is released by means of subsequent treatment with a reducing gas from surface groups capable of reacting with H$_2$S.

2. A process according to Claim 1 for use with oxygen-containing gaseous mixtures, characterized in that the oxygen is removed before entering the adsorption reactor, as the gaseous mixture is passed through a catalyst bed known per se in which part of the H$_2$S reacts with the oxygen to be removed to form elemental sulphur.

## Revendications

1. Procédé pour l'élimination de l'hydrogène sulfuré de mélanges gazeux exempts d'oxygène par adsorption, dans un réacteur d'adsorption, sur des matériaux adsorbants contenant du carbone sous des pressions de 1 à 80 bars et régénération par abaissement de la pression et (ou) modification de la température avec rinçage concomitant à l'aide d'un composant non adsorbable ou peu adsorbable du mélange gazeux, caractérisé en ce que l'on emploie comme matériau adsorbant un tamis moléculaire carboné, préparé à partir de combustibles bitumineux fossiles et (ou) plus récents, dont le volume des pores, déterminé par adsorption de méthanol, pour des pores d'un rayon inférieur à 10 nm, est de 15 à 25 cm³ par 100 g et est inférieur à 10 cm³/100 g pour les pores d'un rayon de 0,35 à 10 nm, et dont les groupes superficiels, susceptibles de réagir avec le H$_2$S, ont été éliminés par un post-traitement de la surface interne avec un gaz réducteur.

2. Procédé suivant la revendication 1, caractérisé en ce que, dans le cas de mélanges gazeux contenant de l'oxygène, cet oxygène est éliminé avant l'arrivée dans le réacteur d'adsorption par passage du mélange gazeux à traves le lit d'un catalyseur connu en soi, sur lequel une fraction du H$_2$S réagit avec l'oxygène à éliminer pour former du soufre élémentaire.